# DEMANDE DE BREVET EUROPEEN

(11) **EP 2 275 836 A2**
(43) Date de publication de la demande: **19.01.2011**
(21) Numéro de dépôt: 10169712.6
(22) Date de dépôt: 15.07.2010
(51) Int. Cl.: G01T 1/24

(54) **Dispositif de détection de rayonnement à agencement amélioré**

(30) Priorité: 16.07.2009 FR 0954928
(71) Demandeur: Commissariat à l'Énergie Atomique et aux Énergies Alternatives, 75015 Paris (FR)
(72) Inventeur: Monnet, Olivier, 38210, TULLINS (FR); Montemont, Guillaume, 38000, GRENOBLE (FR)
(74) Mandataire: Ilgart, Jean-Christophe

(57) **Abrégé**

L'invention concerne un dispositif de détection de rayonnement électromagnétique, en particulier ionisant, formé d'un assemblage de blocs de détection semi-conducteurs parallélépipédiques juxtaposés (100₁,...100ₘ), chaque bloc de détection, l'assemblage étant prévu de manière à réduire la zone morte de détection.

## Description

### DOMAINE TECHNIQUE

La présente invention se situe dans le domaine technique des détecteurs semi-conducteurs de rayonnements électromagnétiques, en particulier ionisants, tels que les détecteurs de rayonnement X ou gamma.

Elle concerne la mise en oeuvre d'un dispositif de détection de rayonnement formé d'un assemblage de détecteurs juxtaposés ou empilés, dont l'agencement permet une réduction de la zone morte de détection et de l'encombrement de l'assemblage.

L'invention apporte ainsi des améliorations en termes d'efficacité de détection et trouve des applications dans des domaines tels que l'imagerie médicale, la tomographie.

### ART ANTÉRIEUR

Un dispositif détecteur de rayonnement ionisant tel qu'un détecteur de rayons X ou gamma, peut comporter un assemblage de blocs semi-conducteurs de détection parallélépipédiques.

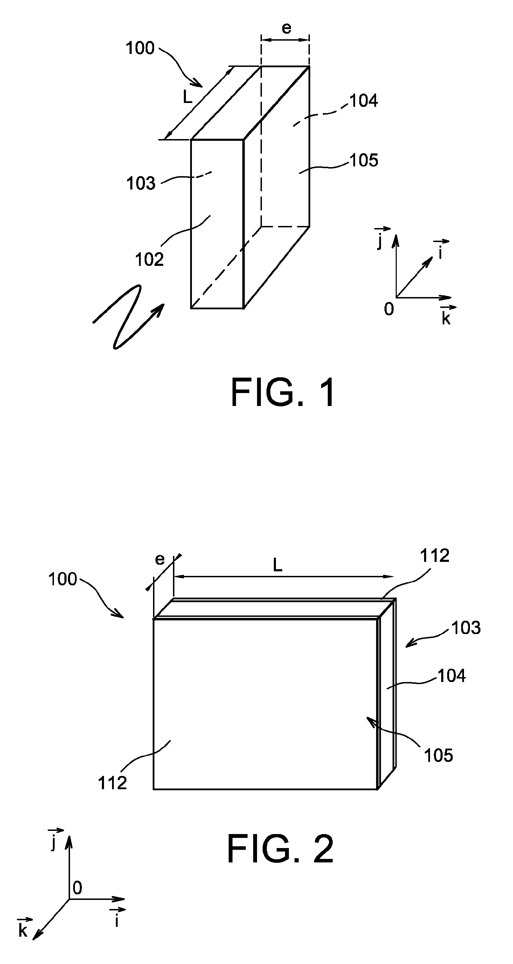

Un exemple de bloc de détection 100 est donné sur la figure 1.

Ce bloc de détection 100 peut avoir une longueur L (définie dans une direction *̅i̅*̅ d'un repère orthogonal [O;*̅i̅*̅;*̅j̅*̅;*̅k̅*̅]) qui peut être de l'ordre par exemple de plusieurs dizaines de millimètres, et qui est définie entre une de ses faces appelée « face de détection » 102, exposée à un rayonnement R, par exemple un rayonnement X ou gamma, et une autre face 104, appelée « face arrière » et qui est opposée à ladite face de détection 102. Le bloc semi-conducteur 100 de détection peut également avoir une épaisseur e (définie dans une direction *̅k̅*̅ d'un repère orthogonal [O;*̅i̅*̅;*̅j̅*̅;*̅k̅*̅]) comprise par exemple entre plusieurs centaines de micromètres et plusieurs millimètres séparant une première face 103 dite « de polarisation » et une seconde face dite « de polarisation » 105 opposée et parallèle à la première face 103 de polarisation. Les faces de polarisation 103, 105 du bloc 100 de détection sont des faces comportant des électrodes polarisées de telle sorte que le bloc semi-conducteur est soumis à un champ électrique entre les faces de polarisation.

Sur la figure 2, un élément détecteur de rayonnement suivant l'art antérieur est représenté. Il comprend sur chaque face de polarisation d'un bloc de détection 100, une électrode, sous forme de zones conductrices 112 s'étendant sur toute la surface des faces de polarisation de ce bloc de détection 100.

Dans chaque élément de détection semi-conducteur, les charges électriques qui sont produites par interaction entre un rayonnement et le matériau semi-conducteur, sont destinées à être converties en signaux électriques et récupérées au niveau des électrodes.

Ainsi, une électrode d'un premier type, par exemple une anode, est disposée sur une première face 103 de polarisation d'un bloc semi-conducteur 100 de détection, et une électrode d'un deuxième type, par exemple une cathode est formée sur une deuxième face de polarisation 105 du bloc semi-conducteur 100 de détection.

L'application d'une tension entre des électrodes situées sur des faces de polarisation opposées d'un bloc de détection permet d'extraire des signaux électriques de détection.

L'épaisseur e séparant les faces de polarisation d'un bloc détecteur 100 de rayonnement ionisant est limitée à cause des propriétés de transport de charges des matériaux actuellement utilisés.

On cherche généralement à associer un nombre important d'éléments détecteurs en les empilant ou en les juxtaposant les uns aux autres, pour pouvoir disposer d'un volume de détection important, ce qui permet d'obtenir une efficacité de détection élevée.

Un dispositif détecteur de rayonnement ionisant suivant l'art antérieur comprenant un assemblage de blocs semi-conducteurs juxtaposés est donné par exemple dans le document US 6 236 051.

Dans un tel dispositif, l'agencement est prévu de sorte que deux blocs semi-conducteurs de détection adjacents partagent une cathode commune ou une anode commune et sont assemblés par l'intermédiaire d'une colle conductrice.

Le document EP 1 762 863 A2, présente un dispositif de détection de rayonnement ionisant ayant un agencement semblable.

Le document "CdZnTe detectors for the positron emission tomographic imaging of small animals"; Drezet, A. Monnet, O. Montemont, G. Rustique, J. Sanchez, G. Verger, Nuclear Science Symposium Conference Record, 2004 IEEE, Publication Date: 16-22 Oct. 2004, Volume: 7, On page(s): 4564 - 4568 Vol. 7, E-ISBN: 0-7803-8701-5, Number of Pages: 7 vol. divulgue un autre dispositif de détection de rayonnement ionisant suivant l'art antérieur.

Un autre dispositif de détection de rayonnement ionisant suivant l'art antérieur, est donné dans le document : "Readout and performance of thick CZT strip detectors with orthogonal coplanar anodes" ; Macri, J.R. Donmez, B. Hamel, L.-A. Julien, M. McClish, M. McConnell, M.L. Miller, R.S. Ryan, J.M. Widholm, M. ; Space Sci. Center, New Hampshire Univ., Durham, NH, USA ; Nuclear Science Symposium Conference Record, 2002 IEEE, Publication Date: 10-16 Nov. 2002, Volume: 1, On page(s): 468 - 472 vol.1, Number of Pages: 3 vol.

Il se pose le problème de réaliser un nouveau dispositif détecteur de rayonnement à blocs de détection juxtaposés, qui présente des améliorations en termes de réduction des zones mortes de détection.

### EXPOSÉ DE L'INVENTION

L'invention concerne un dispositif de détection de rayonnement électromagnétique, en particulier ionisant, formé d'un assemblage de blocs de détection semi-conducteurs parallélépipédiques juxtaposés, chaque bloc de détection ayant : une longueur donnée séparant une face de détection et au moins une face arrière opposée à ladite face de détection, une épaisseur donnée séparant une première face de polarisation comportant une ou plusieurs électrodes et une deuxième face de polarisation comportant une ou plusieurs autres électrodes, et une largeur donnée, l'assemblage étant tel qu'il comporte un premier bloc de détection et un deuxième bloc de détection adjacents, une première face de polarisation du deuxième bloc de détection étant située en regard d'une première face de polarisation du premier bloc de détection. De préférence, la première face de polarisation du deuxième bloc de détection comporte des électrodes de même nature que celles de la première face de polarisation du premier bloc de détection. Par électrodes de même nature, on entend qu'elles sont destinées à être portées au même potentiel.

Selon un premier aspect de l'invention, le premier bloc de détection est prévu avec une longueur différente de celle du deuxième bloc de détection ou une largeur différente de celle du deuxième bloc de détection.

Ainsi, lorsque le premier bloc de détection et le deuxième bloc de détection ont leurs faces de détection respectives sensiblement dans un même plan, la première face de polarisation du bloc le plus long ou le plus large, dépasse de celle de l'autre bloc, ce qui peut permettre d'accéder à une ou plusieurs électrodes situées sur une zone de la première face de polarisation qui dépasse, et d'assurer une connexion avec un circuit de polarisation sur cette zone.

Selon une possibilité de mise en oeuvre, les blocs de détection peuvent comprendre, sur une première face de polarisation, des électrodes parallèles entre elles et orientées selon une première direction, et sur une deuxième face de polarisation des électrodes parallèles entre elles et orientées selon une deuxième direction, orthogonale à la première direction. Un tel agencement permet de mettre en oeuvre un matriçage d'électrodes afin de former une matrice de pixels, ou lorsque plusieurs blocs de détection sont agencés, une matrice 3D de voxels.

Les électrodes situées sur la première face de polarisation du premier bloc de détection peuvent avoir la même orientation que les électrodes de ladite première face de polarisation du deuxième bloc de détection.

Selon une possibilité, au moins une électrode située sur la première face de polarisation du premier bloc peut être connectée électriquement à au moins une électrode située sur la première face de polarisation du deuxième bloc. Cela peut permettre de prévoir un seul circuit dédié à la polarisation d'électrodes et à la détection des signaux, relié à deux blocs de détection différents. D'une façon préférée, cette connection électrique est réalisée par une couche conductrice.

Le premier bloc de détection peut avoir une longueur supérieure à celle du deuxième bloc de détection. Cela peut permettre de prévoir d'établir un contact électrique avec un circuit de polarisation et de détection des signaux sur le bloc de détection le plus long.

Le premier bloc de détection peut avoir une largeur inférieure de celle du deuxième bloc de détection. Cela peut permettre de prévoir d'établir un contact électrique avec un autre circuit de polarisation et de détection des signaux sur le bloc de détection le plus large.

Les électrodes de la première face de polarisation du deuxième bloc de détection et de la première face de polarisation du premier bloc de détection, peuvent être destinées à être mises à un premier potentiel, tandis que les électrodes de la deuxième face de polarisation du deuxième bloc de détection et de la deuxième face de polarisation du premier bloc de détection, sont destinées à être mises à un deuxième potentiel, différent du premier potentiel. On peut ainsi mettre un assemblage dans lequel des anodes sont placées en regard d'anodes, tandis que des cathodes sont placées en regard de cathodes.

Selon une possibilité, l'assemblage et la connexion électrique entre deux blocs de détection adjacents peut être réalisé par l'intermédiaire d'une couche de colle conductrice anisotrope intercalée entre ces deux blocs de détection.

Selon une autre possibilité, l'assemblage et la connexion électrique entre deux blocs de détection adjacents peuvent être réalisés par l'intermédiaire d'une colle conductrice ou de points de colle conductrice. Dans ce cas, la colle conductrice peut être déposée par exemple par sérigraphie.

Le dispositif de détection suivant l'invention peut comprendre en outre des moyens de polarisation des électrodes et de traitement de signaux issus des électrodes.

Le dispositif peut comprendre en outre notamment : au moins un support assemblé au premier bloc de détection et doté de moyens de polarisation d'électrodes et/ou de moyens traitement de signaux issus d'électrodes, les moyens de polarisation et/ou de traitement de signaux étant connectés électriquement à au moins une électrode du premier bloc de détection.

Selon un mode d'assemblage et de connexion possible entre blocs de détection, le premier support peut être disposé entre le premier bloc de détection et le deuxième bloc de détection et comporter au moins une ouverture, à travers laquelle une connexion électrique entre au moins une électrode du premier bloc de détection et au moins une électrode du deuxième bloc de détection est établie à l'aide d'au moins un élément conducteur traversant ladite ouverture. Cet élément conducteur peut être par exemple un goutte de colle conductrice. Le premier support peut être en outre connecté électriquement à au moins une électrode du premier bloc de détection ou à au moins une électrode du deuxième bloc de détection.

L'assemblage de blocs de détection peut être tel qu'il comporte au moins un troisième bloc de détection adjacent au premier bloc de détection, la deuxième face de polarisation du premier bloc de détection étant située en regard de la deuxième face de polarisation du troisième bloc de détection, au moins une électrode située sur la deuxième face de polarisation du premier bloc étant connectée électriquement à au moins une électrode située sur la deuxième face de polarisation du troisième bloc de détection.

Selon une possibilité, le premier bloc de détection peut avoir une longueur supérieure à celle du troisième bloc de détection et/ou une largeur inférieure à celle du troisième bloc de détection.

Le dispositif peut alors comprendre en outre au moins un deuxième support doté de moyens de polarisation d'électrodes et/ou de moyens de traitement de signaux issus d'électrodes, les moyens de polarisation et/ou de traitement de signaux étant connectés électriquement à au moins une électrode du premier bloc de détection et/ou du troisième bloc de détection.

Le deuxième support peut être disposé entre le premier bloc de détection et le troisième bloc de détection et comporte au moins une ouverture prévue de sorte qu'une connexion électrique entre au moins une électrode du premier bloc de détection et au moins une électrode du deuxième bloc de détection peut être établie, le deuxième support étant en outre connecté électriquement à au moins une électrode du premier bloc de détection ou à au moins une électrode du deuxième bloc de détection.

Cette connexion électrique peut-être établie à l'aide d'une colle conductrice.

Selon un deuxième aspect, l'invention concerne un dispositif de détection de rayonnement électromagnétique, en particulier ionisant, formé d'un assemblage de blocs de détection semi-conducteurs parallélépipédiques juxtaposés, chaque bloc de détection ayant : une longueur donnée séparant une face de détection et au moins une face arrière opposée à ladite face de détection, une épaisseur donnée séparant une première face de polarisation comportant une ou plusieurs électrodes et une deuxième face de polarisation comportant une ou plusieurs autres électrodes, et une largeur donnée,
l'assemblage étant tel qu'il comporte :
- un premier bloc de détection et un deuxième bloc de détection adjacents, une première face de polarisation du deuxième bloc de détection étant située en regard d'une première face de polarisation du premier bloc de détection,
- un premier support doté de moyens de polarisation et/ou de traitement de signaux connectés électriquement à au moins une électrode du premier bloc de détection ou à au moins une électrode du deuxième bloc de détection, le premier support étant disposé entre le premier bloc de détection et le deuxième bloc de détection et comportant au moins une ouverture, une connexion électrique entre au moins une électrode du premier bloc de détection et au moins une électrode du deuxième bloc de détection étant établie à l'aide d'au moins un élément conducteur traversant ladite ouverture.

Pour l'un ou l'autre des aspects de l'invention, les blocs de détection peuvent être à base d'un matériau semi-conducteur choisi parmi l'un des matériaux suivants : du CdTe, ou du CdZnTe, ou du Si, ou de l'AsGa.

Le rayonnement détecté par un dispositif suivant l'invention peut être un rayonnement X ou gamma.

L'invention concerne par ailleurs un dispositif d'imagerie médicale comprenant un dispositif détecteur tel que précédemment défini.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
- la figure 1 donne un exemple de bloc de détection parallélépipédique à base de matériau semi-conducteur intégré dans un dispositif de détection de rayonnement ionisant,
- la figure 2 illustre un exemple d'élément détecteur de rayonnement ionisant suivant l'art antérieur,
- les figures 3A-3B illustrent un exemple d'élément détecteur de rayonnement comportant une pluralité d'électrodes longilignes parallèles réparties sur une face d'un bloc de détection parallélépipédique à base de matériau semi-conducteur et orientées dans le sens de la longueur du bloc de détection, ainsi qu'une pluralité d'électrodes longilignes parallèles réparties sur une face opposée du bloc de détection et orientées dans le sens de la largeur du bloc de détection,
- la figure 4 illustre une matrice de pixels ou de voxels formés par l'agencement des électrodes de part et d'autre d'un bloc de détection semi-conducteur dans un dispositif de rayonnement suivant l'invention,
- la figure 5, illustre un exemple d'agencement d'électrodes sur deux blocs de détection voisins dans un dispositif détecteur de rayonnement suivant l'invention,
- les figures 6A, 6B, illustrent un exemple d'agencement dans un dispositif détecteur de rayonnement suivant l'invention, comportant des blocs de détection voisins de longueurs différentes,
- les figures 7A-7C, illustrent un exemple d'assemblage dans un dispositif détecteur de rayonnement suivant l'invention, de blocs de détection avec des circuits de polarisation et de traitement de signaux,
- la figure 8, illustre un exemple d'assemblage dans un dispositif détecteur de rayonnement suivant l'invention, de blocs de détection et de circuits de polarisation et de traitement de signaux, à l'aide de couches de collage conductrices anisotropes,
- la figure 9A-9B, illustrent des exemples d'assemblage dans un dispositif détecteur de rayonnement suivant l'invention, de blocs de détection adjacents et d'un support ajouré intercalé entre ces blocs et comportant des circuits de polarisation et de traitement de signaux dédiés aux dits blocs de détection adjacents,
- la figure 10, illustre un exemple d'assemblage dans un dispositif détecteur de rayonnement suivant l'invention, comportant des blocs de détection voisins de longueurs différentes et de largeurs différentes,
- la figure 11, illustre un exemple de dispositif détecteur de rayonnement ionisant suivant l'invention,

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

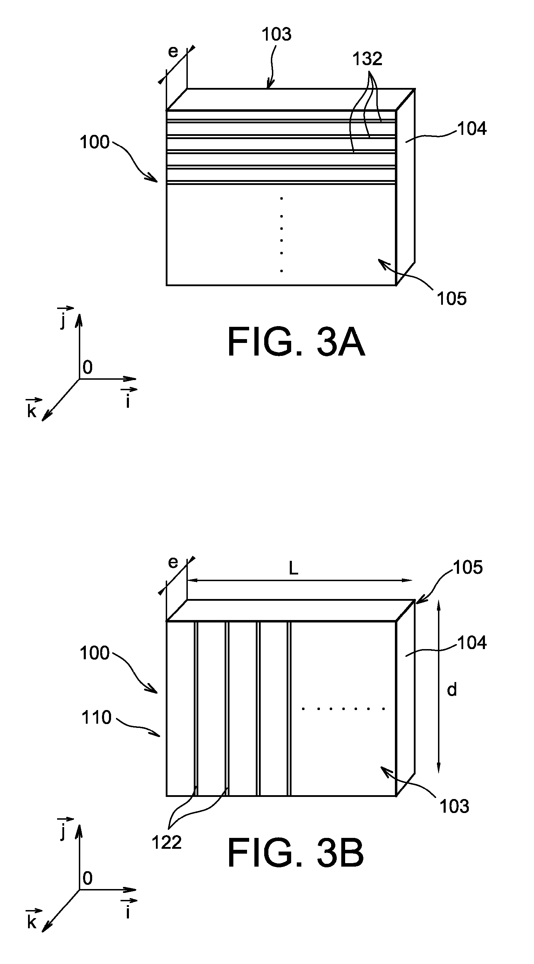

Sur les figures 3A, et 3B, un exemple d'élément de détection électromagnétique, en particulier de rayonnement ionisant, est donné.

L'élément de détection comprend un bloc de détection semi-conducteur parallélépipédique tel que celui décrit par exemple précédemment en liaison avec la figure 1, et peut être doté par exemple d'une pluralité d'électrodes disposées sur chacune des faces de polarisation 103, 105 du bloc de détection 100.

Les électrodes peuvent être sous forme de lignes ou de pistes, ou de bandes, conductrices longilignes, parallèles entre elles, et à base d'un matériau métallique tel que par exemple de l'or ou du platine.

L'élément (ou bloc) de détection peut comporter des électrodes 122 parallèles qui s'étendent dans la direction de la largeur d (mesurée dans une direction *̅j̅*̅ d'un repère orthogonal [O;*̅i̅*̅;*̅j̅*̅;*̅k̅*̅]) sur la première face de polarisation 103 du bloc de détection 100. La première face de polarisation 103 du bloc de détection 100 peut comporter m électrodes. Selon un exemple, m peut être égal à 8.

Sur la deuxième face de polarisation 105, les électrodes peuvent être également parallèles et s'étendre dans la direction de la longueur L (mesurée dans une direction *i* d'un repère orthogonal [O;*i*;*j*;*k*]) du bloc détecteur 100. La deuxième face de polarisation du bloc de détection 100 peut comporter n électrodes avec n qui peut, selon un exemple, être égal à 16.

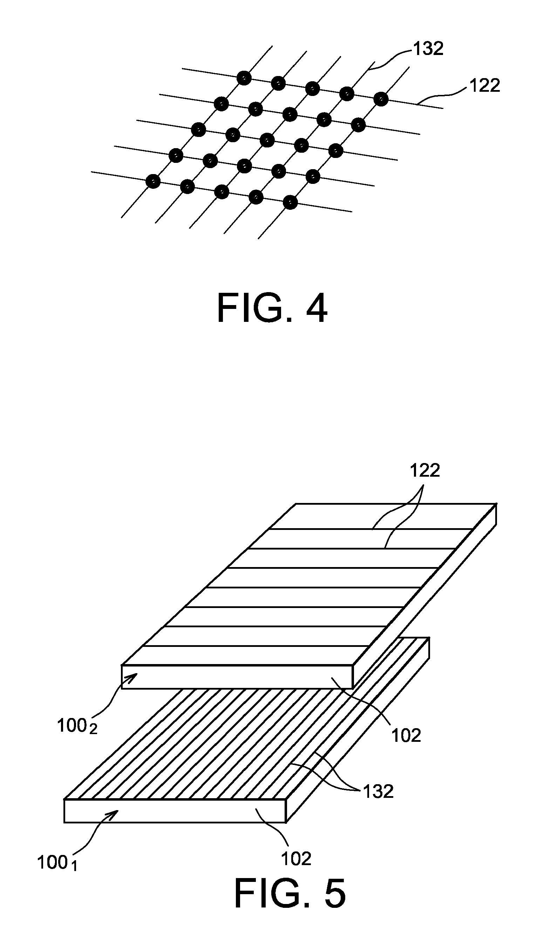

Ainsi, la répartition des électrodes 122 et 132 de part et d'autre d'un bloc de détection 100 peut être telle que lorsqu'on projette dans un même plan parallèle aux faces de polarisation du bloc de détection, les électrodes 122 situées sur une face de polarisation du bloc semi-conducteur 100 et les électrodes 132 situées sur l'autre face de polarisation de ce bloc de détection 100, sont orthogonales entre elles et forment une matrice ou un quadrillage, dont les intersections correspondent à des pixels ou des voxels d'une matrice de pixels ou de voxels (figure 4).

Le matériau à base duquel le bloc de détection 100 est formé peut être un matériau semi-conducteur, par exemple un semi-conducteur pouvant fonctionner à température ambiante, tel que du CdTe, ou du CdZnTe, ou du Si, ou de l'AsGa.

On peut localiser des interactions dans un bloc de détection par mise en coïncidence d'un signal d'une des électrodes (anode ou cathode) situées sur une face de polarisation du bloc de détection et un signal d'une des électrodes (cathode ou anode) parmi celles situées sur l'autre face de polarisation.

Ainsi, par bloc de détection, on entend un détecteur tel que précédemment décrit.

Un dispositif détecteur de rayonnement suivant l'invention comprend plusieurs éléments détecteurs, ou blocs de détection, juxtaposés ou empilés.

Selon un exemple, dans un cas où le dispositif comporte 16 blocs juxtaposés du type de celui décrit en liaison les figures 3A et 3B, et dans lequel chaque bloc comporte 8 électrodes sur une face et 16 électrodes sur une autre face, un dispositif de détection avec 16 * 8 * 16 = 2048 voxels peut être mis en oeuvre.

Un dispositif de détection de rayonnement suivant l'invention peut comprendre une pluralité d'éléments de détection du type de celui qui vient d'être décrit.

Ces éléments de détection peuvent être agencés de sorte qu'une face de polarisation d'un premier bloc de détection 100₁ de détection comportant des électrodes 122, destinées à être mises à un potentiel donné et jouant par exemple le rôle d'anodes, est située en regard d'une face de polarisation d'un deuxième bloc 100₂, adjacent et comportant des électrodes 122, destinées à être mises au même potentiel donné et jouant ainsi également le rôle d'anodes. Dans ce cas, les éléments de détection sont agencés de sorte qu'une face de polarisation du deuxième bloc de détection 100₂ comportant des électrodes 132, destinées à être mises à un autre potentiel, différent du potentiel donné, et jouant par exemple le rôle de cathodes, peut être situé en regard d'une face de détection d'un bloc 100₃ comportant des électrodes 132, également destinées à être mises audit autre potentiel donné et jouant le rôle de cathodes .

Une telle configuration, dans laquelle des anodes d'un premier bloc de détection 100₁ sont situées en regard d'anodes d'un deuxième bloc de détection 100₂ adjacent au deuxième bloc de détection 100₂, et des cathodes du deuxième bloc de détection 100₂ sont situées en regard de cathodes d'un troisième bloc 100₃ de détection, adjacent au deuxième bloc 100₂, peut permettre de polariser des électrodes de même nature, disposées sur des blocs de détection adjacents, à l'aide d'un même circuit de polarisation ou de même moyens de polarisation ou de moyens de polarisation situés sur un même support, par exemple un support de type carte ou circuit imprimé. Par électrode de même nature, on entend des électrodes destinées à être polarisées au même potentiel. Il s'agit par exemple des anodes de deux blocs de détection adjacents, ou des cathodes de deux blocs de détection adjacents.

Une telle configuration peut permettre également d'obtenir une zone morte réduite par rapport à une autre configuration (non représentée) dans laquelle des anodes d'un bloc de détection sont situées en regard de cathodes d'un bloc de détection adjacent et dans laquelle une isolation de ces cathodes et anodes de blocs adjacents, est prévue et augmente l'écartement les blocs adjacents, et par conséquent la zone morte du détecteur.

Avec une telle configuration, une réduction de la zone morte de l'ordre de plusieurs millimètres peut être par exemple obtenue pour un empilement de 16 blocs de détection de 1 mm.

Selon cette configuration, deux électrodes de même nature, appartenant à deux blocs de détection adjacents, sont au contact l'une de l'autre, le contact étant réalisé par un matériau conducteur, tel une colle conductrice.

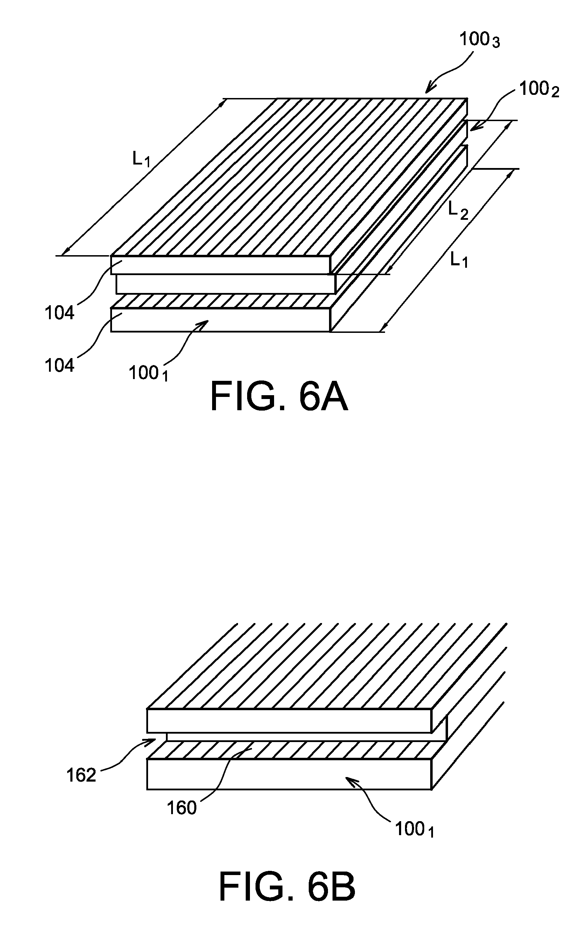

Sur la figure 6A, une mise en oeuvre d'un dispositif de détection avec des blocs de détection 100₁, 100₂, 100₃, adjacents de longueurs respectives différentes est représentée. Le premier bloc 100₁ a une longueur L₁ plus importante que celle du deuxième bloc 100₂, adjacent au premier bloc 100₁ et de longueur L₂. Un assemblage comportant une alternance de blocs ayant une première longueur L₁ et de blocs d'une deuxième longueur L₂ telle que L₂ < L₁ peut être ainsi réalisé.

Dans ce cas, lorsque les faces de détection 102 respectives des blocs adjacents 100₁, 100₂, 100₃, sont sensiblement coplanaires ou situées dans un même plan, les faces arrières 104 des blocs 100₁, 100₃ de longueur L₁ plus importante dépassent par rapport à celles des blocs 100₂ de longueur L₂ plus faible.

A l'aide de ce dépassement, lorsque les blocs 100₁, 100₂, 100₃, sont assemblés, une partie des faces de polarisation des blocs 100₁, 100₂, de longueur L₁ plus importante dépasse, ce qui peut permettre d'avoir un accès aux électrodes 132, à proximité de la face arrière 104 des blocs de détection 100₁, et 100₃.

Ainsi une zone 160 de prise de contact pour des moyens de polarisation des électrodes 132 ou/et des moyens de traitement de signaux générés au niveau de ces électrodes 132, peut être réalisée (figure 6B).

L'alternance de blocs 100₁, 100₂, 100₃, de longueurs différentes, forme à proximité des faces arrière 104 respectives des blocs de détection 100₁, 100₂, 100₃, des logements 162 entre deux blocs 100₁, 100₃. Dans chacun de ces logements 162, peut être inséré un support comportant des moyens de polarisation des électrodes (un tel support n'étant pas représenté sur la figure 6B). Un tel support fait partie du dispositif de détection, mais n'est pas à considérer comme faisant partie d'un bloc de détection, ce dernier se limitant au matériau détecteur et aux électrodes déposées sur ce dernier.

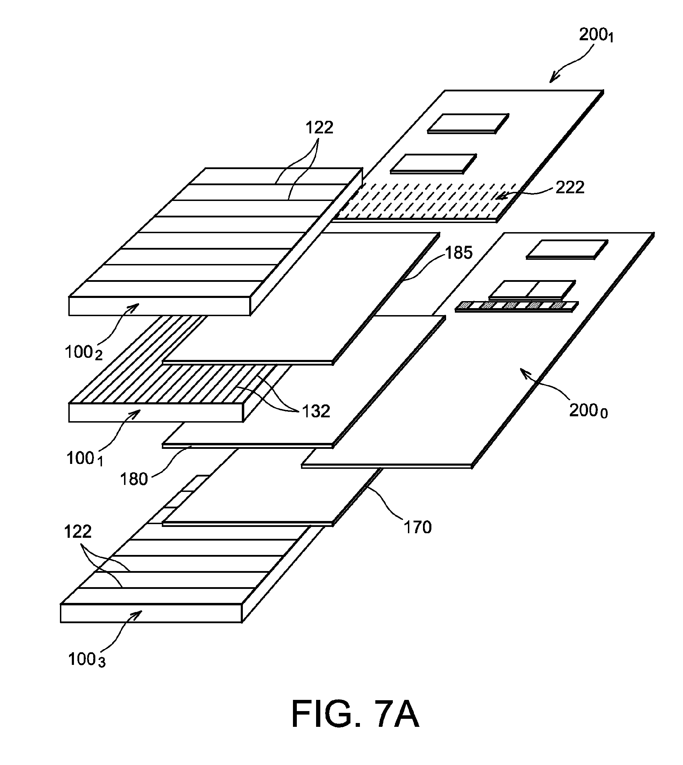

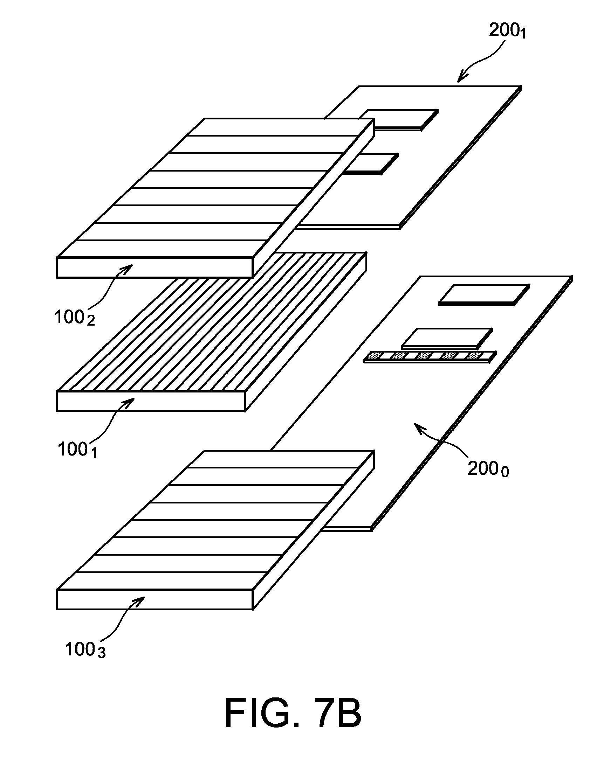

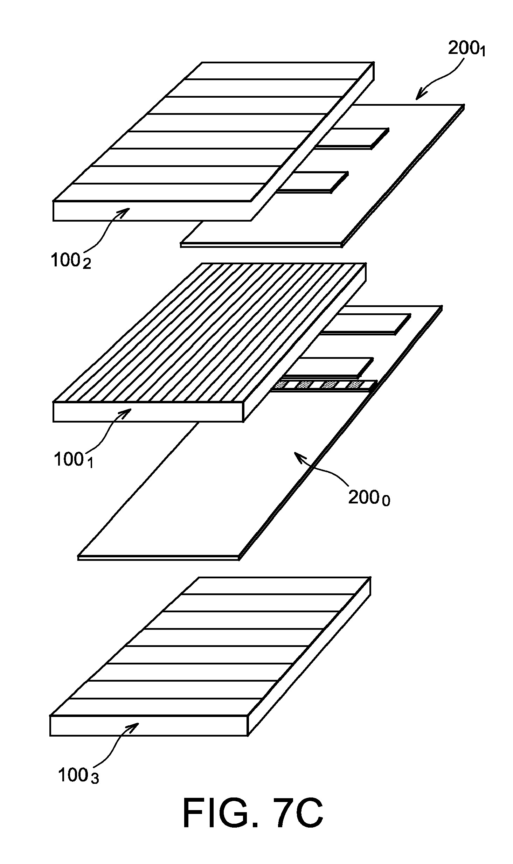

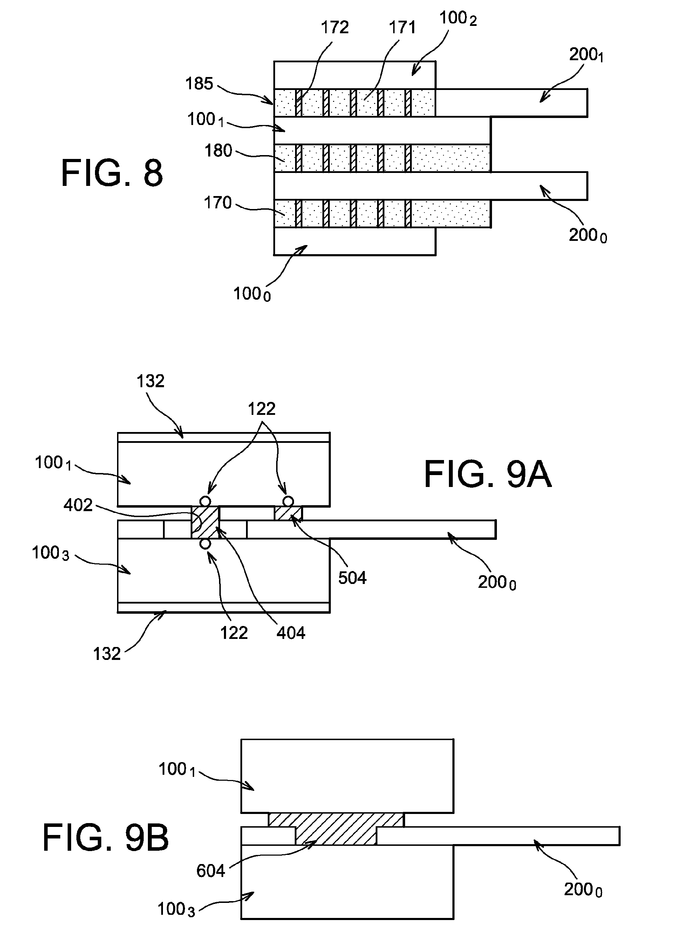

Des exemples d'agencements par rapport à un tel support sont donnés sur les figures 7A-7C, tandis que sur la figure 8, un exemple d'assemblage avec ce support est donné.

Le support 200₁ est doté de moyens de polarisation et est dédié à une polarisation des électrodes 132, par exemple des anodes, situées sur une première face de polarisation d'un premier bloc de détection 100₁. Ce support peut comprendre des moyens de traitement du signal par exemple sous forme d'ASIC, ces derniers pouvant être dédiés au traitement faible bruit d'un signal électronique ou dédiés à la conversion analogique numérique. D'autres moyens de traitement, de mise en forme de signal, de filtrage, de déclenchement à seuil, de multiplexage, sommation de signaux analogiques peuvent être également prévus.

Le support 200₁ peut être par exemple sous forme d'une carte de circuit imprimé, comportant des connexions ainsi qu'au moins un circuit d'alimentation ou des moyens d'alimentation dédié(s) à la polarisation d'électrodes selon un potentiel de polarisation donné, par exemple de l'ordre de 0 V, lorsqu'il est dédié à une polarisation d'anodes. Le support 200₁ peut être également doté d'un ou plusieurs circuits de traitement de signaux issus des électrodes. Pour mettre en oeuvre une polarisation et un traitement des signaux, le support 200₁ peut comporter un ou plusieurs ASIC (ASIC pour « Application Specific Integrated Circuit »). Un bloc transfert de l'information vers un ordinateur, un bloc de traitement faible bruit du signal électronique analogique bas niveau, des réseaux RC pour la polarisation des détecteurs peuvent être prévus.

Les moyens de traitement de signaux peuvent comprendre par exemple une ou plusieurs des fonctions suivantes : amplification, mise en forme et filtrage, déclenchement à seuil, codage des voies ayant détecté un évènement, multiplexage, sommation de signaux analogiques, intégration.

Le support 200₁ peut être doté également de connexions prévues pour connecter des voies d'au moins un de ses circuit électronique avec les électrodes 132 d'une première face de polarisation du premier bloc de détection 100₁. Ces connexions peuvent avoir par exemple une répartition semblable à celles des électrodes 132 dévoilées par l'extrémité dépassant des blocs 100₁, 100₃, de même longueur L₁ et être sous forme de bandes conductrices 222 réparties sur l'une ou l'autre des faces du support 200₁, ou éventuellement sur les deux faces du support 200₁. La polarisation des électrodes 132 situées sur la première face de polarisation du deuxième bloc de détection 100₂ et jouant par exemple le rôle d'anodes, ainsi que le traitement de signaux issus de ces électrodes peut être assurée à l'aide de moyens situés sur le même support 200₁ ou des même moyens que ceux qui sont reliés aux électrodes du premier bloc de détection 100₁, situées en vis-à-vis. Ainsi, le support 200₁ peut assurer un contact électrique avec les électrodes 132 du premier bloc de détection 100₁, ces dernières étant disposées en vis-à-vis des électrodes 132, de même nature, du deuxième bloc de détection 100₂. Avantageusement, le contact mécanique et électrique entre les électrodes 132, de même nature, des premier et second blocs de détection est réalisé par une colle conductrice. Cette colle peut prendre la forme d'une fine couche de colle conductrice anisotrope 185, ou de fines épaisseurs de colle conductrice isotrope reliant deux à deux des électrodes 132 de même nature, appartenant à deux blocs de détection adjacents. On évite alors de placer le support 200₁ dans l'espace séparant les électrodes 132 de deux blocs de détection 100₁ et 100₂ adjacents. En disposant seulement de la colle conductrice dans cet espace, on réduit l'épaisseur de ce dernier, ce qui permet une réduction de la zone morte.

Dans l'exemple de dispositif des figures 7A-7C, un autre support 200₀ peut également comprendre des moyens de polarisation et des moyens de traitement de signaux issus des électrodes 122, par exemple des cathodes d'un troisième bloc de détection 100₃ ainsi que cathodes du premier bloc de détection 100₁. Les moyens de polarisation de l'autre support 200₀ permettent de polariser les électrodes selon un autre potentiel de polarisation donné, qui peut être par exemple de l'ordre de -1000 V lorsque ces moyens sont dédiés à une polarisation de cathodes.

On peut réduire le nombre de voies électroniques nécessaires à la polarisation ou/et à l'acquisition de signaux en connectant des électrodes de blocs adjacents 100₁, 100₂ situées sur des faces de polarisations en regard l'une de l'autre.

Lorsqu'un rayonnement est émis, la localisation d'une interaction avec un bloc de détection, peut être réalisée par la recherche d'une coïncidence entre un signal d'anode et un signal de cathode, ainsi qu'un traitement approprié.

Selon un exemple de fonctionnement du dispositif : un circuit électronique du support 200₁ détecte un signal sur sa 3^{ème} voie. Ceci peut signifier qu'une interaction a eu lieu dans les voxels de la 3^{ème} anode du bloc de détection 100₁ ou de la 3^{ème} anode du deuxième bloc de détection 100₂. Si cette information est mise en relation avec une autre information provenant d'un circuit électronique situé sur un autre support 200₀ dédié aux cathodes du premier bloc de détection 100₁ et d'un troisième bloc de détection 100₃, et qui indique un signal sur sa 1^{ère} voie, cela signifie que l'interaction est localisée dans le premier bloc de détection 100₁ au niveau de son voxel de coordonnées (3 ; 1).

Les électrodes 132 situées sur une première face de polarisation du premier bloc de détection 100₁ peuvent être connectées à celles situées en vis-à-vis sur une première face de polarisation du deuxième bloc de détection 100₂, par exemple à l'aide d'une couche de colle à conduction anisotrope 185 (figure 7A), seules les électrodes 132 du premier bloc 100₁ le plus long étant alors électriquement reliées aux moyens de polarisation et de traitement du support 200₁.

Une colle à conductivité électrique anisotrope comprend par exemple des billes métalliques 172 conductrices, noyées dans un adhésif acrylique 171, et permettant d'assurant un contact électrique dans une seule direction.

Par exemple, une colle anisotrope peut se présenter sous la forme d'un ruban adhésif assurant une conductivité dans la direction définie par son épaisseur et isolante dans un plan parallèle à sa surface.

La couche adhésive à conduction anisotrope 185 peut avoir une épaisseur comprise par exemple entre 10 µm et 100 µm, ou entre 30 à 50 µm.

Selon une possibilité d'agencement, étant donné l'orientation des électrodes 122, jouant par exemple le rôle de cathodes, pour établir une connexion entre les électrodes 122 des blocs de détection 100₂ et 100₃, l'autre support 200₀, peut être intercalé entre les premier et troisième blocs de détection 100₁ et 100₃. L'autre support 200₀ peut être éventuellement réalisé en technologie dite « double-face » et comporter des zones conductrices sur ses deux faces pour établir un contact. Une couche de colle conductrice anisotrope 170 peut permettre d'assurer le contact et l'assemblage entre les électrodes 122 du troisième bloc de détection 100₃ et le support 200₀, tandis qu'une couche de colle conductrice anisotrope 180 peut permettre d'assurer le contact et l'assemblage entre les électrodes 122 du premier bloc de détection 100₁ et le support 200₀. La connexion et l'assemblage entre les électrodes 122, de même nature, des premier et troisième blocs de détection 100₁ et 100₃ sont alors réalisés en disposant, entre ces électrodes, deux couches de colle 180, 170 ainsi que le support 200₀.

Selon une variante, la connexion entre des électrodes 122 de blocs de détection situées en vis-à-vis peut être effectuée à l'aide d'un matériau de collage conducteur, par exemple sous forme de gouttes ou de pistes de colle conductrice sur chaque électrode située sur une face de polarisation d'un premier bloc de détection avant assemblage sur la face de polarisation d'un bloc de détection adjacent.

Dans le cas où l'on souhaite connecter deux à deux une électrode 122, située sur une face d'un bloc de détection, à une électrode de même nature 122, située sur une face d'un bloc de détection adjacent, des points de colle conductrice localisés et connectant uniquement deux électrodes, peuvent être prévus et réalisés par exemple par sérigraphie.

Un autre exemple d'agencement, permettant de réduire le volume séparant les électrodes 122 appartenant à deux blocs de détection adjacents, d'un dispositif de détection de rayonnement suivant l'invention comprenant une pluralité d'éléments de détection (tels que décrits par exemple en liaison avec les figures 3A-3B) est donné sur les figure 9A et 9B.

Dans un tel dispositif les électrodes 122 du premier bloc de détection 100₁ sont situées en regard d'électrodes 122 d'un troisième bloc de détection 100₃ adjacent au bloc de détection 100₁.

Un support 200₀ doté de moyens de polarisation d'électrodes et de moyens de traitement de signaux est intercalé entre les blocs de détection 100₁ et 100₃ et comporte une ou plusieurs ouvertures 402.

Dans chaque ouverture 402 une zone conductrice 404 peut être prévue afin d'établir une connexion électrique entre une électrode 122 d'un bloc de détection 100₁ et une électrode 122 de l'autre bloc de détection 100₃. La zone conductrice 404 peut également permettre d'assembler les blocs de détection 100₁ et 100₃.

Les électrodes 122 des blocs de détection 100₃ et 100₁ situées en regard les unes des autres sont connectées à un ou plusieurs circuits électroniques de polarisation et de traitement de signaux du support 200₀ par l'intermédiaire d'une ou plusieurs zones conductrices 504 du support 200₀ en contact chacune avec une électrode 122 d'un bloc de détection 100₁ parmi les blocs de détection 100₃, 100₁, adjacents (figure 9A). Il est ainsi possible d'atteindre un encombrement amélioré et de réduire le volume séparant deux faces de polarisation de blocs adjacents. Ainsi, deux électrodes, de même nature, appartenant à deux blocs de détection adjacents, et disposées en vis-à-vis l'une de l'autre, peuvent être connectées par une première couche conductrice 404, cette dernière étant établie à travers une ouverture ménagée dans le support 200₀ disposé entre lesdits blocs de détection adjacents 100₁ et 100₃. Dans l'exemple de la figure 9A, une seule de ces deux électrodes peut être électriquement connectée au support 200₀ par une couche conductrice 504. La couche conductrice 504 assure alors la connexion électrique entre une électrode 122 d'un premier bloc de détection 100₁, la couche 404 assurant alors l'interconnexion électrique entre deux électrodes 122, de même nature, appartenant à deux blocs de détection adjacents (100₁ et 100₃), disposées en vis-à-vis.

Sur l'exemple de la figure 9B l'ouverture 402 est remplie d'une zone conductrice 604 prévue afin d'établir une connexion électrique le bloc de détection 100₁ et l'autre bloc de détection 100₃. Cette couche conductrice 604 assure à la fois la connexion des électrodes 122 avec le substrat, et également l'interconnexion entre deux électrodes 122, de même nature, appartenant à deux blocs de détection adjacents 100₁ et 100₃, disposées en vis-à-vis.

Dans un assemblage comportant une pluralité de blocs de détection, ce mode de connexion entre des blocs de détection adjacents peut être éventuellement prévu pour connecter chaque paire de blocs de détection adjacents.

Selon une autre possibilité, on peut prévoir un assemblage dans lequel le mode de connexion décrit en liaison avec les figure 9A-9B est combiné avec un ou plusieurs autres modes de connexion tels que décrits précédemment. Ainsi, le mode de connexion donné en liaison avec la figure 9A-9B peut être appliqué par exemple pour connecter entre elles un premier type d'électrodes 122, par exemple les cathodes de blocs de détection adjacents, tandis que les électrodes d'un deuxième type, par exemple les anodes 132 sont connectées entre elles à l'aide d'un autre agencement, par exemple à l'aide d'une couche conductrice anisotrope ou d'une colle conductrice, seules les anodes appartenant au bloc de détection le plus long étant alors connectées au support comportant les moyens de polarisation et de détection.

On retiendra que selon l'invention, au moins deux électrodes de même nature, appartenant à deux blocs de détection adjacents, et disposées en vis-à-vis l'une de l'autre, sont interconnectées par une couche conductrice. Comme précédemment décrit, cette couche conductrice peut être constituée d'une fine couche de colle anisotrope, ou par des dépôts de colle sous la forme de points ou de lignes.

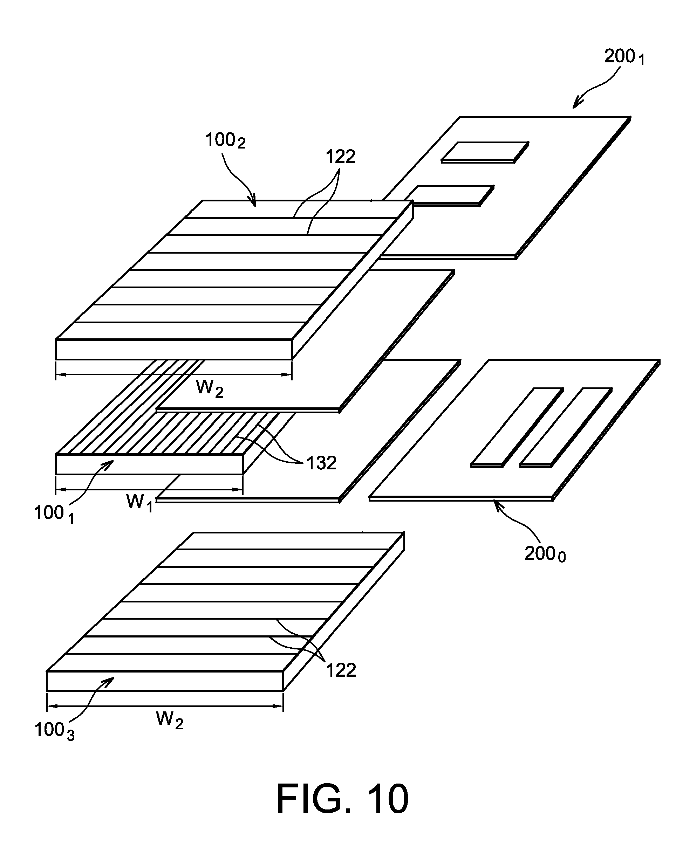

Sur la figure 10, un exemple de mise en oeuvre d'un dispositif de détection comportant des blocs de détection 100₃, 100₁, 100₂, adjacents de largeurs respectives différentes est donné. Le premier bloc 100₁ a une largeur W₁ plus faible que celle du deuxième bloc 100₂, adjacent au premier, le deuxième bloc 100₂ ayant une largeur W₂ telle que W₂ > W₁.

Un assemblage comportant une alternance de blocs ayant une première largeur W₁ et de blocs d'une deuxième longueur W₂ telle que W₂ > W₁ peut être ainsi réalisé.

Dans ce cas, lorsque les faces de détection 102 respectives des blocs adjacents 100₃, 100₁, 100₂, sont sensiblement coplanaires ou situées dans un même plan, les faces latérales du bloc 100₂, de largeur W₂ plus importante dépassent par rapport à celles du bloc 100₁, de largeur W₁ plus faible.

A l'aide de ce dépassement, lorsque les blocs 100₃, 100₁, 100₂ sont assemblés, une partie des faces de polarisation des blocs 100₃, 100₂, de largeur W₂ plus importante dépasse, ce qui peut permettre d'avoir un accès aux électrodes 122.

Ainsi une zone de prise de contact pour des moyens de polarisation des électrodes 122 ou/et des moyens de traitement de signaux générés au niveau de ces électrodes 122, est réalisé.

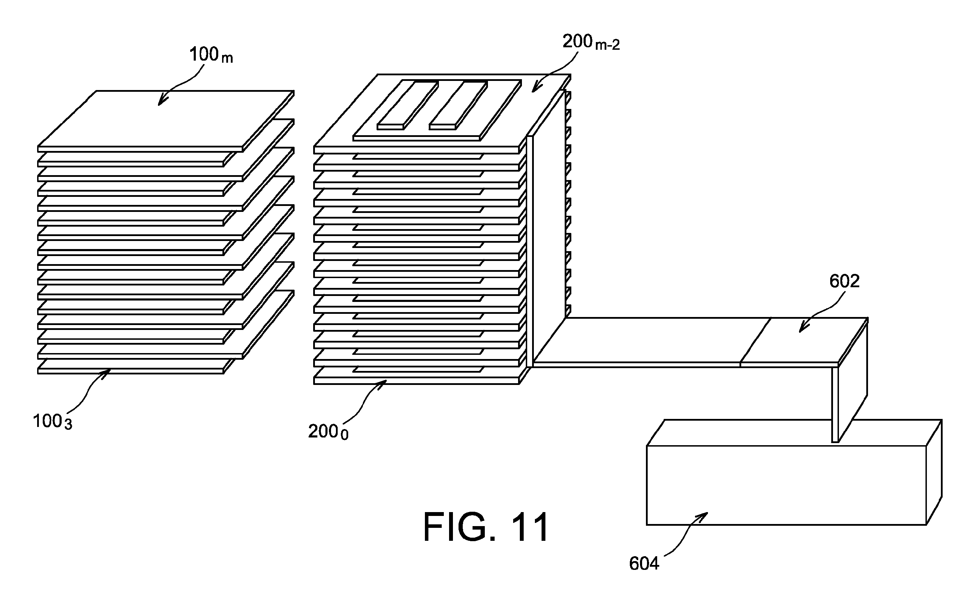

Sur la figure 11, un exemple de dispositif de détection de rayonnement ionisant comportant m blocs de détection 100₀,...100ₘ avec m par exemple égal à 16, avant assemblage avec un dispositif électronique déporté, disposé en face arrière des blocs de détection est donné. Le dispositif électronique comporte m-2 supports 200₀,..., 200ₘ₋₂, sous forme par exemple de cartes de circuits intégrés, dotés chacun de circuits de polarisation et de traitement de signaux, par exemple d'un circuit ASIC à 16 entrées 16 sorties et d'un circuit à 16 entrées et sorties multiplexées.

Un système de connexion 602 peut être prévu pour relier ces circuits à un bloc numérique de traitement 604.

Un dispositif de détection suivant l'invention peut trouver des applications dans le domaine de l'imagerie médicale et être intégré par exemple dans un dispositif de tomographie, par exemple un dispositif de tomographie à émission de positons ou TEP (PET pour « Positron emission tomography » selon la terminologie anglo-saxonne).

## Revendications

1. Dispositif de détection de rayonnement électromagnétique, en particulier ionisant, formé d'un assemblage de blocs de détection semi-conducteurs parallélépipédiques (100₁,...100ₘ) juxtaposés, chaque bloc de détection ayant : une longueur donnée (L₁,..., Lₘ) séparant une face (102) de détection et au moins une face arrière (104) opposée à ladite face de détection, une épaisseur donnée séparant une première face (103) de polarisation comportant une ou plusieurs électrodes (132) et une deuxième face (105) de polarisation comportant une ou plusieurs autres électrodes (122), et une largeur donnée,
l'assemblage étant tel qu'il comporte un premier bloc de détection (100₁) et un deuxième bloc de détection (100₂) adjacents, une première face de polarisation du deuxième bloc de détection étant située en regard d'une première face de polarisation du premier bloc de détection,
le premier bloc de détection ayant une longueur (L1) différente de celle (L2) du deuxième bloc de détection ou une largeur différente de celle du deuxième bloc de détection.

2. Dispositif selon la revendication 1, les blocs de détection (100₁,...100ₘ) comprenant sur une première face de polarisation des électrodes (132) parallèles entre elles et orientées selon une première direction, et sur une deuxième face de polarisation des électrodes (122) parallèles et orientées selon une deuxième direction, orthogonale à la première direction.

3. Dispositif selon la revendication 2, les électrodes (132) situées sur la première face de polarisation du premier bloc (110₁) de détection ayant la même orientation que les électrodes (132) de ladite première face de polarisation du deuxième bloc de détection (110₂).

4. Dispositif selon l'une des revendications 1 à 3, au moins une électrode (132) située sur la première face de polarisation du premier bloc (100₁) étant connectée électriquement à au moins une électrode (132) située sur la première face de polarisation du deuxième bloc (100₂).

5. Dispositif selon l'une des revendications 1 à 4, le premier bloc de détection (100₁) ayant une longueur (L1) supérieure à celle (L2) du deuxième bloc de détection (100₂).

6. Dispositif selon la revendication 5, le premier bloc de détection (100₁) ayant une largeur (W1) inférieure à celle (W2) du deuxième bloc de détection (100₂).

7. Dispositif selon l'une des revendications 1 à 6, les électrodes (132) de la première face de polarisation du deuxième bloc de détection et de la première face de polarisation du premier bloc de détection, étant destinées à être mises à un premier potentiel, les électrodes (122) de la deuxième face de polarisation du deuxième bloc de détection et de la deuxième face de polarisation du premier bloc de détection, étant destinées à être mises à un deuxième potentiel, différent du premier potentiel.

8. Dispositif selon l'une des revendications 1 à 7, comprenant au moins deux blocs de détection assemblés et connectés électriquement par l'intermédiaire d'une couche conductrice anisotrope (170) intercalée entre ces deux blocs de détection.

9. Dispositif selon l'une des revendications 1 à 8, au moins deux blocs de détection assemblés et connectés électriquement par l'intermédiaire d'un colle conductrice ou de points de colle conductrice.

10. Dispositif selon l'une des revendications 1 à 9, comprenant en outre : au moins un support (200) assemblé au premier bloc de détection et doté de moyens de polarisation d'électrodes et/ou de moyens traitement de signaux issus d'électrodes, les moyens de polarisation et/ou de traitement de signaux étant connectés électriquement à au moins une électrode du premier bloc de détection.

11. Dispositif selon la revendication 10, dans lequel le premier support (200₁) est disposé entre le premier bloc de détection (100₁) et le deuxième bloc de détection (100₂) et comporte au moins une ouverture (402), une connexion électrique entre au moins une électrode du premier bloc de détection et au moins une électrode du deuxième bloc de détection étant établie à l'aide d'au moins un élément (504) conducteur traversant ladite ouverture, le premier support (200₁) étant en outre connecté électriquement à au moins une électrode du premier bloc de détection ou à au moins une électrode du deuxième bloc de détection.

12. Dispositif selon l'une des revendications 1 à 11, l'assemblage étant tel qu'il comporte au moins un troisième bloc de détection (100₃) adjacent au premier bloc de détection (100₁), la deuxième face de polarisation du premier bloc de détection (100₁) étant située en regard de la deuxième face de polarisation du troisième bloc de détection, au moins une électrode (122) située sur la deuxième face de polarisation du premier bloc (100₁) étant connectée électriquement à au moins une électrode (122) située sur la deuxième face de polarisation du troisième bloc de détection (100₂).

13. Dispositif selon la revendication 12, le premier bloc de détection (100₁) ayant une longueur (L1) supérieure à celle (L2) du troisième bloc de détection (100₂) et/ou une largeur (W1) inférieure à celle (W2) du troisième bloc de détection (100₀).

14. Dispositif selon l'une des revendications 12 ou 13, comprenant en outre : au moins un deuxième support (200₀) intercalé entre le premier bloc de détection (100₁) et le troisième bloc de détection (100₀), le deuxième support (200₀) étant doté de moyens de polarisation d'électrodes et/ou de moyens traitement de signaux issus d'électrodes, les moyens de polarisation et/ou de traitement de signaux étant connectés électriquement à au moins une électrode du premier bloc de détection et/ou du troisième bloc de détection.

15. Dispositif selon la revendication 14, dans lequel le deuxième support (200₁) est disposé entre le premier bloc de détection (100₁) et le troisième bloc de détection (100₀) et comporte au moins une ouverture (402), une connexion électrique entre au moins une électrode du premier bloc de détection et au moins une électrode du deuxième bloc de détection étant établie à l'aide d'au moins un élément (504) conducteur traversant ladite ouverture, le deuxième support (200₁) étant en outre connecté électriquement à au moins une électrode du premier bloc de détection ou à au moins une électrode du deuxième bloc de détection.

16. Dispositif selon l'une des revendications 14, le deuxième support et le premier bloc de détection étant assemblés et connectés électriquement par l'intermédiaire d'une première couche conductrice anisotrope (170) ou d'une colle conductrice intercalée, le deuxième support et le troisième bloc de détection étant assemblés et connectés électriquement par l'intermédiaire d'une deuxième couche conductrice anisotrope (170) intercalée ou d'une colle conductrice intercalée.

17. Dispositif de détection de rayonnement électromagnétique, en particulier ionisant, formé d'un assemblage de blocs de détection semi-conducteurs parallélépipédiques (100₁,...100ₘ) juxtaposés, chaque bloc de détection ayant : une longueur donnée (L₁,..., Lₘ) séparant une face (102) de détection et au moins une face arrière (104) opposée à ladite face de détection, une épaisseur donnée séparant une première face (103) de polarisation comportant une ou plusieurs électrodes (132) et une deuxième face (105) de polarisation comportant une ou plusieurs autres électrodes (122), et une largeur donnée,
l'assemblage étant tel qu'il comporte :
- un premier bloc de détection (100₁) et un deuxième bloc de détection (100₂) adjacents, une première face de polarisation du deuxième bloc de détection étant située en regard d'une première face de polarisation du premier bloc de détection,
- un premier support (200₁) doté des moyens de polarisation et/ou de traitement de signaux connectés électriquement à au moins une électrode du premier bloc de détection ou à au moins une électrode du deuxième bloc de détection, le premier support étant disposé entre le premier bloc de détection (100₁) et le deuxième bloc de détection (100₂) et comportant au moins une ouverture (402), une connexion électrique entre au moins une électrode du premier bloc de détection et au moins une électrode du deuxième bloc de détection étant établie à l'aide d'au moins un élément (404) conducteur traversant ladite ouverture.

18. Dispositif selon la revendication 17, les blocs de détection (100₁,...100ₘ) comprenant sur une première face de polarisation des électrodes (132) parallèles entre elles et orientées selon une première direction, et sur une deuxième face de polarisation des électrodes (122) parallèles et orientées selon une deuxième direction, orthogonale à la première direction.

19. Dispositif selon la revendication 18, les électrodes (132) situées sur la première face de polarisation du premier bloc (110₁) de détection ayant la même orientation que les électrodes (132) de ladite première face de polarisation du deuxième bloc de détection (110₂).
